# EUROPÄISCHE PATENTSCHRIFT

(11) **EP 2 761 690 B1**
(45) Veröffentlichungstag und Bekanntmachung des Hinweises auf die Patenterteilung: **30.09.2015**
(21) Anmeldenummer: 12743958.6
(22) Anmeldetag: 01.08.2012
(51) Int. Cl.: H01M 8/00, B60L 11/18, H01M 8/04, H01M 10/46, H01M 16/00, B60L 7/10, B60W 10/26

(54) **BETRIEBSVERFAHREN EINES ELEKTRISCHEN ENERGIE-SYSTEMS EINES KRAFTFAHRZEUGS UMFASSEND EINE BRENNSTOFFZELLEN-ANLAGE, EINEN AKKUMULATOR UND EINEN ELEKTROMOTOR**
OPERATING METHOD FOR AN ELECTRIC ENERGY SYSTEM OF A MOTOR VEHICLE COMPRISING A FUEL CELL SYSTEM, AN ACCUMULATOR AND AN ELECTRIC MOTOR
PROCÉDÉ PERMETTANT DE FAIRE FONCTIONNER UN SYSTÈME D'ÉNERGIE ÉLECTRIQUE D'UN VÉHICULE À MOTEUR, CONSTITUÉ D'UNE INSTALLATION DE PILES À COMBUSTIBLE, D'UN ACCUMULATEUR ET D'UN MOTEUR ÉLECTRIQUE

(30) Priorität: 26.09.2011 DE 102011083453
(43) Veröffentlichungstag der Anmeldung: 06.08.2014
(73) Patentinhaber: Bayerische Motoren Werke Aktiengesellschaft, 80809 München (DE)
(72) Erfinder: GOETZ, Georg, 84439 Steinkirchen (DE); BURCKHARDT, Sylvester, 85614 Kirchseeon (DE); BAUER, Michael, 85774 Unterföhring (DE); BUCHNER, Andreas, 82237 Steinebach (DE); PFATTRISCH, Florian, 82538 Geretsried-Gelting (DE)
(74) Vertreter: Schmidt, Günter H. H.
(86) Internationale Anmeldenummer: PCT/EP2012/065024
(87) Internationale Veröffentlichungsnummer: WO 2013/045139

(56) Entgegenhaltungen:
- EP-A1- 1 286 405
- DE-A1- 10 055 291
- US-A1- 2007 222 413
- US-A1- 2009 105 895

## Beschreibung

Die Erfindung betrifft ein Betriebsverfahren eines elektrischen Energie-Erzeugungs-, Bereitstellungs- und Verbrauchs-Systems eines Kraftfahrzeugs, bestehend aus einer Brennstoffzellen-Anlage mit zumindest einer Wasserstoff-(Luft)-Sauerstoff-Brennstoffzelle, einem Akkumulator und einem insbesondere als Fahrzeug-Antriebsmotor fungierenden Elektromotor, die unter Zwischenschaltung von Schaltelementen solchermaßen elektrisch gekoppelt sind, dass die Brennstoffzellen-Anlage sowohl den Elektromotor, als auch den Akkumulator mit elektrischer Energie versorgen kann und der Akkumulator den Elektromotor mit elektrischer Energie versorgen kann.

Übliche elektrische Kraftfahrzeug-Systeme mit einer Brennstoffzellen-Anlage zur Erzeugung von elektrischer Energie, einem Akkumulator zur Energiespeicherung und einem aus diesen genannten Elementen gespeistem Elektromotor zum Antrieb des Kraftfahrzeugs weisen einen der Brennstoffzellen-Anlage nachgeschalteten elektrischen Spannungswandler (in Form eines DC/DC-Wandlers) auf, der das elektrische Spannungsniveau der Brennstoffzellen-Anlage auf das übliche Spannungsniveau des Hochleistungs-Bordnetzes des Fahrzeugs, d.h. auf das Spannungsniveau des Akkumulators sowie des Elektromotors, welches beispielsweise in der Größenordnung von 150 Volt liegen kann, transformiert. In Abhängigkeit von der Ausgestaltung bzw. vom Arbeitsprinzip des als Antriebsmotor fungierenden Elektromotors kann letzterem ein Wechselrichter vorgeschaltet sein, der den Gleichstrom der Brennstoffzellen-Anlage sowie des Akkumulators in Wechselstrom wandelt, dabei jedoch das Spannungsniveau als solches nur unwesentlich verändert.

Ein in vorhergehenden Absatz genannter elektrischer Spannungswandler ist, da er auf die maximale Ausgangsleistung der Brennstoffzellen-Anlage bzw. zumindest auf die maximale Aufnahmeleistung des elektrischen Fzg.-Antriebsmotors ausgelegt sein muss, ein aufwändiges, viel Bauraum beanspruchendes und ein hohes Gewicht aufweisendes Bauteil, auf welches man gerne verzichten würde.

EP 1 286 405 offenbart ein Betriebsverfahren für ein Fahrzeug mit einer Brennstoffzellen-Anlage, einem Akkumulator und einen Elektromotor, wobei der Akkumulator durch Rekuperation über den Elektromotor aufgeladen wird.

Dahingehend, nämlich für den Betrieb eines elektrischen Energie-Systems eines Kraftfahrzeugs nach dem Oberbegriff des Anspruchs 1 ohne einen elektrischen Spannungswandler auszukommen, eine Maßnahme aufzuzeigen ist Aufgabe der vorliegenden Erfindung.

Die Lösung dieser Aufgabe ist dadurch gekennzeichnet, dass mit einer solchen System-Auslegung, dass der Akkumulator sowohl von der Brennstoffzellen-Anlage alleine als auch vom als Generator betriebenen Elektromotor alleine im wesentlichen vollständig aufgeladen werden kann, ohne Durchführung einer elektrischen Spannungs-Wandlung und folglich ohne Vorsehen eines elektrischen Spannungswandlers in Abhängigkeit von der Höhe des von der Brennstoffzellen-Anlage bereit gestellten elektrischen Spannungsniveaus und des vom Akkumulator angebotenen elektrischen Spannungsniveaus und der vom elektrischen Fahrzeug-Antriebsmotor nachgefragten elektrischen Leistung ein erstes Schaltelement in der elektrischen Verbindung zwischen der Brennstoffzellen-Anlage und einem mit dem Akkumulator und dem Elektromotor elektrisch verbunden Knotenpunkt sowie ein zweites Schaltelement in der Verbindung zwischen dem Akkumulator und dem besagten Knotenpunkt bedarfsgerecht geöffnet oder geschlossen, d.h. in eine keinen Stromdurchgang oder einen Stromdurchgang ermöglichende Position gebracht werden. Dabei bedeutet der Begriff "bedarfsgerecht" konkret, dass der elektrische Leistungsbedarf des Elektromotors vorrangig aus der Brennstoffzellen-Anlage und hilfsweise zusätzlich aus dem Akkumulator befriedigt wird, und dass dann, wenn die von der Brennstoffzellen-Anlage als Angebot bereit stehende elektrische Leistung anhand von deren Spannungsniveau erkennbar die vom Elektromotor nachgefragte elektrische Leistung übersteigt, die sich aus der Differenz von Angebot und Nachfrage ergebende Überschuss-Leistung der Brennstoffzellen-Anlage solange dem Akkumulator zugeführt wird, als der maximal zulässige Lade-Strom des Akkumulators nicht überschritten wird und der Akkumulator noch ein Rest-Speichervermögen zumindest in Höhe der im aktuellen Fahrzustand des Fahrzeugs durch Rekuperation über den als Generator betriebenen Elektromotor dem Akkumulator zuführbaren kinetischen Energie des Kraftfahrzeugs besitzt.

Mit den erfindungsgemäßen Merkmalen ist eine von einer elektronischen Steuereinheit durchführbare Betriebsstrategie eines gattungsgemäßen Systems bzw. eine Schalt-Strategie für die genannten Schaltelemente angegeben, die es ermöglicht, ohne Spannungs-Wandlung und somit auch ohne Einsatz eines elektrischen Spannungswandlers die BrennstoffzellenAnlage mit hohem Wirkungsgrad zu betreiben und gleichzeitig die Belastung des Akkumulators durch Zustände, welche seine Lebensdauer herabsetzen, zu minimieren. Hierfür ist die Brennstoffzellen-Anlage derart ausgelegt, dass deren elektrische Nennspannung, d.h. die Höhe des bereitstellbaren Spannungsniveaus größer ist als die elektrische (Nenn)-Spannung des vollständig beladenen Akkumulators. Letzterer kann somit sowohl von der Brennstoffzellen-Anlage als auch vom Elektromotor, wenn dieser als Generator betrieben wird, im wesentlichen vollständig beladen, d.h. aufgeladen werden. Dabei wird der als Fahrzeug-Antriebsmotor fungierende Elektromotor dann als Generator betrieben und dabei durch das Kraftfahrzeug angetrieben, wenn dieses abgebremst, d.h. dessen kinetische Energie verringert werden soll. Die kinetische Energie des Kraftfahrzeugs kann damit (um die Umwandlungsverluste reduziert) rekuperiert und im Akkumulator zwischengespeichert werden.

Mit der vorgeschlagenen Betriebsstrategie wird die Grundversorgung des Elektromotors über die Brennstoffzellen-Anlage abgedeckt und es wird nur der Spitzenbedarf des Elektromotors zusätzlich aus dem Akkumulator gedeckt. Ob ein solcher Spitzenbedarf vorliegt, kann eine elektronische Steuereinheit anhand des von der Brennstoffzellen-Anlage bereit gestellten Spannungsniveaus erkennen und daraufhin den Akkumulator zur Versorgung des Elektromotors hinzu schalten. Somit wird erreicht, dass der Akkumulator keine unnötigen Lade- und Entlade-Zyklen erfährt, welche dessen Lebensdauer und Wirkungsgrad signifikant reduzieren würden. Wiederbeladen wird der Akkumulator vorrangig durch Rekuperation, weshalb erfindungsgemäß eine zusätzliche Beladung des Akkumulators durch die Brennstoffzellen-Anlage dann, wenn diese aufgrund entsprechend geringer Leistungs-Nachfrage durch den Elektromotor hierzu anhand von deren Spannungsniveau für eine elektronische Steuereinheit erkennbar in der Lage ist, nur soweit durchgeführt wird, bis der Akkumulator noch ein Rest-Speichervermögen aufweist, welches zumindest die im aktuellen Fahrzustand des Kraftfahrzeugs vorhandene kinetische Energie in Form von rekuperierter elektrischer Energie aufnehmen kann. Ferner wird im Falle der Beladung des Akkumulators durch die Brennstoffzellen-Anlage berücksichtigt, dass der elektrische Ladestrom am Akkumulator geringer sein muss als der für diesen maximal zulässige Ladestrom. Kann das letztgenannte Kriterium nicht eingehalten werden oder ist der Akkumulator bereits ausreichend beladen, was eine elektronische Steuereinheit anhand von dessen Spannungsniveau feststellen kann, so wird die elektrische Verbindung zwischen der Brennstoffzellen-Anlage und dem Akkumulator mittels des geeigneten Schaltelements unterbrochen. Fordert dabei auch der Elektromotor keine Leistung an, so fährt die Brennstoffzellen-Anlage dann aufgrund fehlender Leistungs-Abnahme selbsttätig in den Leerlaufbetrieb; bei Leistungs-Anforderung durch den Elektromotor gibt dann die Brennstoffzellen-Anlage selbsttätig nur noch soviel Leistung ab wie angefordert wird. Vorzugsweise steuert die genannte, das erfindungsgernäße Betriebsverfahren darstellende elektronische Steuereinheit die genannten Schaltelemente solchermaßen, dass der Ladezustand des Akkumulators in einem für dessen Lebensdauer und Wirkungsgrad beim Laden und Entladen günstigen Bereich, welcher vorzugsweise in der Größenordnung von 30% bis 80% liegen kann, gehalten wird. Selbstverständlich berücksichtigt die elektronische Steuereinheit bei der Ansteuerung der genannten Schaltelemente weiterhin, dass kein elektrischer Strom vom Akkumulator oder vom als Generator betriebenen Elektromotor ausgehend in die Brennstoffzellen-Anlage gelangen kann. Hierfür wird das Spannungsniveau, das am im unabhängigen Patentanspruch genannten Knoten aktuell vorliegt, mit dem von der Brennstoffzellen-Anlage bereit gestellten Spannungsniveau verglichen. Ist letzteres nicht höher als das Spannungsniveau am besagten Knoten, so muss die elektrische Verbindung zwischen der Brennstoffzellen-Anlage und dem genannten Knoten durch Öffnen bzw. Offenhalten des in dieser Verbindung vorgesehenen Schaltelements unterbrochen sein oder werden.

Erheblich erweitert werden können die bereits in dieser soweit (und in der nachfolgenden Figurenbeschreibung mit Ergänzungen) beschriebenen Betriebsstrategie enthaltenen Möglichkeiten durch eine gezielte Beeinflussung des von der Brennstoffzellen-Anlage bereit gestellten Spannungsniveaus. Wenn dieses bereit gestellte Spannungsniveau nennenswert höher liegt als das vom Elektromotor zusammen mit dem Akkumulator unter Berücksichtigung der weiter oben genannten und die Beladung des Akkumulators durch die Brennstoffzellen-Anlage auf bestimmte Fälle beschränkenden Bedingungen verarbeitbare Spannungsniveau, so kann das Spannungsniveau der Brennstoffzellen-Anlage durch Modulation des Sauerstoffgehalts, nämlich durch Absenkung des Sauerstoffgehalts, auf der Kathodenseite der Brennstoffzelle(n) dem Bedarf angepasst werden. Der Wirkungsgrad der Brennstoffzellen-Anlage wird hierdurch nicht nennenswert verschlechtert. Entsprechendes gilt, wenn das von der Brennstoffzellen-Anlage bereit gestellte elektrische Spannungsniveau nennenswert niedriger ist als das vom Elektromotor oder vom Akkumulator unter Berücksichtigung der weiter oben genannten und die Beladung des Akkumulators durch die Brennstoffzellen-Anlage auf bestimmte Fälle beschränkenden Bedingungen nachgefragte Spannungsniveau. Dann kann das Spannungsniveau der Brennstoffzellen-Anlage durch Modulation und hier durch Anhebung des Sauerstoffgehalts auf der Kathodenseite der Brennstoffzelle(n) dem Bedarf angepasst werden.

Entsprechend moduliert werden kann der Sauerstoffgehalt auf der Kathodenseite der Brennstoffzelle(n) der Brennstoffzellen-Anlage durch geeignete Maßnahmen am der Brennstoffzellen-Anlage bzw. den Kathodenseiten der Brennstoffzellen zugeführten Luftstrom. Wenn dieser Luftstrom mit einem Teil des einen erheblich verringerten Sauerstoffgehalt aufweisenden Abgasstroms der Brennstoffzellen-Anlage versetzt wird, sinkt naturgemäß der Sauerstoffgehalt des zugeführten Luftstroms. Es kann somit zur bedarfsweisen Absenkung des Spannungsniveaus der Brennstoffzellen-Anlage die Rate von auf die Kathodenseite der Brennstoffzelle(n) zurück geführtem Brennstoffzellen-Abgas verändert werden. Es kann aber auch direkt der Luftdurchsatz an der Kathodenseite der Brennstoffzelle(n) verändert werden, jedoch sind einer solchen Veränderung Grenzen gesetzt, bei Unterschreiten derer die Brennstoffzellen der Anlage Schaden nehmen könnten. Eine Erhöhung des Sauerstoff-Gehalts des der Kathodenseite der Brennstoffzelle(n) zugeführten Luftstromes zur bedarfsweisen Anhebung des Spannungsniveaus der Brennstoffzellen-Anlage kann durch Hinzufügung von Sauerstoff aus einem geeigneten Kurzzeitspeicher für Sauerstoff beispielsweise in Form eines Zeoliths erfolgen, der zuvor aus zugeführter Luft mit Sauerstoff befüllt wurde. Alternativ oder zusätzlich kann mittels eines Molekularsiebs oder dgl. der Stickstoff-Anteil im der Brennstoffzellen-Anlage zugeführten Luftstrom verringert werden, wodurch sich der Sauerstoffanteil in diesem Luftstrom zwangsläufig erhöht.

Schließlich wird vorgeschlagen die elektrische Spannung aller bzw. jeder Einzel-Brennstoffzelle(n) der Brennstoffzellen-Anlage kontinuierlich auf Einhaltung der für diese zulässigen Grenzwerte zu überwachen und ein Überschreiten oder Unterschreiten dieser Grenzwerte durch Veränderung der zugeführten Brennstoffmenge zu verhindern.

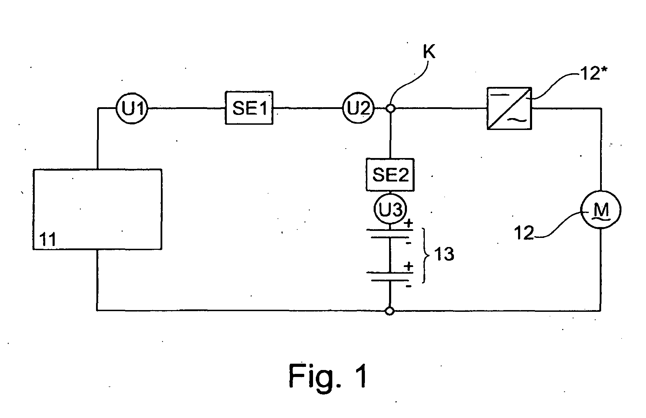

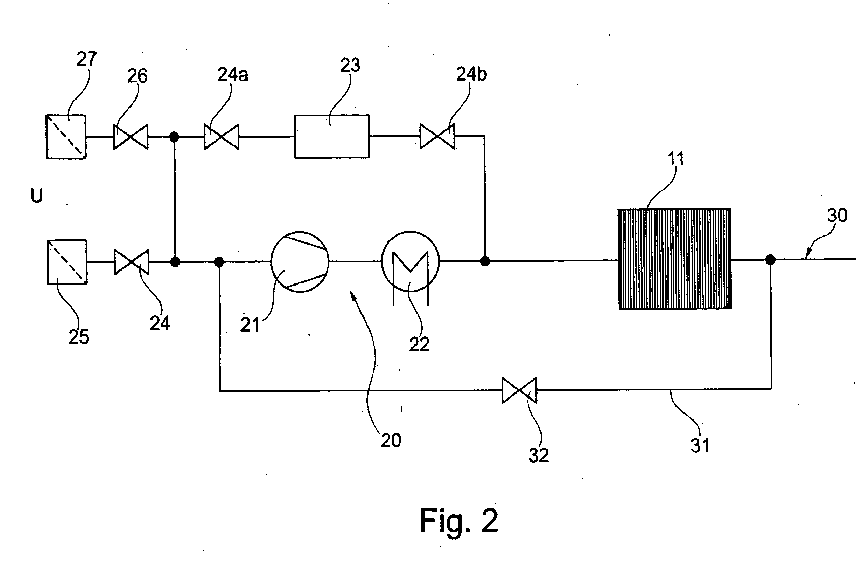

Weiter erläutert wird die Erfindung anhand der beiden beigefügten Prinzipdarstellungen. **Figur 1** zeigt einen auf das wesentliche beschränkten elektrischen Schaltplan und **Figur 2** zeigt verschiedene Möglichkeiten zur Modulation des Sauerstoffgehalts auf den Kathodenseiten der EinzelBrennstoffzellen, wobei diese Möglichkeiten einzeln oder kumulativ vorgesehen sein können.

Zunächst auf **Figur 1** Bezug nehmend ist in diesem elektrischen Schaltplan die Brennstoffzellen-Anlage mit der Bezugsziffer 11, ein hier aus zwei in Reihe geschalteten elektrischen Batterien bestehender Akkumulator mit der Bezugsziffer 13 und ein elektrischer Fzg.-Antriebsmotor, auch Elektromotor genannt, mit der Bezugsziffer 12 gekennzeichnet. Letzterem ist ein Wechselrichter 12* vorgeschaltet, der den von der Brennstoffzellen-Anlage 11 bzw. vom Akkumulator 13 bereit gestellten elektrischen Gleichstrom in Wechselstrom umwandelt. In der obigen allgemeinen Beschreibung ist ein solcher Wechselrichter nur kurz erwähnt, da dieser nicht erfindungswesentlich ist sondern nur bei Verwendung eines entsprechenden mit Wechselspannung betriebenen Elektromotors 12 benötigt wird. Ist also ein solcher Wechselspannungs-Elektromotor eingesetzt, so bildet dieser Elektromotor 12 mit dem vorgeschalteten Wechselrichter 12* quasi eine Einheit, so dass insbesondere in der obigen Beschreibungseinleitung, aber auch in der folgenden Figurenbeschreibung anstelle des Begriffs "Elektromotor" auch der Begriff "Elektromotor mit vorgeschaltetem Wechselrichter" stehen kann.

Die elektrische Ausgangsseite und somit quasi der "Pluspol" der Brennstoffzellen-Anlage 11 ist unter Zwischenschaltung eines ersten Schaltelements SE1 mit dem Wechselrichter 12* und somit mit der elektrischen Eingangsseite des Elektromotors 12 verbunden. Zwischen der Brennstoffzellen-Anlage 11 und dem ersten Schaltelement SE1 liegt dabei (jedenfalls bei geöffnetem Schaltelement SE1) das von der Brennstoffzellen-Anlage 11 angebotene elektrische Spannungsniveau U1 vor. Auch die elektrische Ausgangsseite und somit der Pluspol des Akkumulators 13 ist unter Zwischenschaltung eines zweiten Schaltelements SE2 mit dem Wechselrichter 12* und somit mit der elektrischen Eingangsseite des Elektromotors 12 verbunden. Zwischen dem Akkumulator 13 und dem zweiten Schaltelement SE2 liegt dabei (jedenfalls bei geöffnetem Schaltelement SE1) das vom Akkumulator 13 angebotene elektrische Spannungsniveau U3 vor. In einem elektrischen Knoten K, der sich vor dem Wechselrichter 12* bzw. vor dem Elektromotor 12 befindet, sind die Verbindungsleitungen zwischen der Brennstoffzellen-Anlage 11 und dem Elektromotor 12 sowie zwischen dem Akkumulator 13 und dem Elektromotor 12 zu einer einzigen Verbindungsleitung zusammen geführt, wobei sich das jeweilige Schaltelement SE1 bzw. SE2 auf der dem Elektromotor 12 (bzw. dem Wechselrichter 12*) abgewandten Seite des Knotens K in der jeweiligen Verbindungsleitung befinden.

Die beiden Schaltelemente SE1, SE2 können geschlossen oder offen sein, d.h. eine Verbindung zwischen den über die dargestellten elektrischen Verbindungs-Leitungen mit den beiden Seiten des jeweiligen Schaltelements SE1 bzw. SE2 verbundenen Elementen herstellen oder unterbrechen. Selbstverständlich ist über weitere elektrische Leitungen ein geschlossener Stromkreis dargestellt, so dass also sowohl der andere quasi "Minuspol" der Brennstoffzellen-Anlage 11 als auch der Minuspol des Akkumulators 13 mit der Ausgangsseite des Elektromotors 12 verbunden ist. In Abhängigkeit vom Betrag der elektrischen Spannungsniveaus U1, U3 sowie der Intensität der Nachfrage des Elektromotors 12 nach elektrischer Energie und der Schaltstellung der beiden Schaltelemente SE1, SE2 stellt sich am Knoten K bzw. an der Eingangsseite des Elektromotors 12, genauer. hier an der Eingangsseite des Wechselrichtes 12*, ein bestimmtes Spannungsniveau U2 ein.

Ausdrücklich ist in der vorliegenden elektrischen Schaltungsanordnung gemäß Fig.1 kein elektrischer Spannungswandler vorgesehen. Beim üblichen Stand der Technik befindet sich an der Stelle des ersten Schaltelements SE1 ein solcher elektrischer Spannungswandler und es sind im üblichen Stand der Technik die beiden Schaltelemente SE1, SE2 so nicht vorhanden bzw. es werden im Stand der Technik eventuell vorhandene Schaltelemente nicht in erfindungsgemäßer Weise betätigt. Ein Verzicht auf einen solchen elektrischen Spannungswandler wird durch das erfindungsgemäße Betriebsverfahren ermöglicht, wenn die Brennstoffzellen-Anlage 11, der Akkumulator 13 sowie der Elektromotor 12 (ggf. mit Wechselrichter 12*) hinsichtlich ihrer elektrischen Nenn-Spannung derart ausgelegt sind, dass der Akkumulator 13 sowohl von der Brennstoffzellen-Anlage 11 als auch vom als Generator betriebenen Elektromotor 12 im wesentlich vollständig aufgeladen werden kann, und wenn die Schaltelemente SE1, SE2 bedarfsabhängig geeignet geschaltet werden. Ferner kann der elektrische Innenwiderstand der Brennstoffzellen-Anlage 11 und damit das lastabhängige von der Brennstoffzellen-Anlage bereit gestellte Spannungsniveau U1 durch Variation des Sauerstoffgehaltes auf den Kathodenseite der Brennstoffzellen der Brennstoffzellen-Anlage 11 einstellbar sein, worauf in Verbindung mit Figur 2 noch näher eingegangen wird.

Mit einem ersten Betriebsmodus des anhand von **Fig.1** erläuterten erfindungsgemäßen Betriebsverfahrens wird der Elektromotor 12 alleine von der Brennstoffzellen-Anlage 11 mit elektrischer Energie versorgt, ohne dass eine Unterstützung durch den Akkumulator 13 benötigt wird. In diesem ersten Betriebsmodus ist das erste Schaltelement SE1 geschlossen und das zweite Schaltelement SE2 geöffnet, wodurch der Akkumulator 13 abgekoppelt ist. Mit einem zweiten Betriebsmodus des erfindungsgemäßen Betriebsverfahrens wird der als Fahrzeug-Antriebsmotor fungierende Elektromotor 12 sowohl von der Brennstoffzellen-Anlage 11 als auch vom Akkumulator 13 mit elektrischer Energie versorgt, falls die Brennstoffzellen-Anlage 11 nicht in der Lage ist, die Nachfrage des Elektromotors 12 nach elektrischer Energie alleine zu befriedigen. In diesem zweiten Betriebsmodus sind das erste Schaltelement SE1 andauernd und das zweite Schaltelement SE2 jedenfalls solange geschlossen, als die elektrischen Spannungsniveaus U2 und U3 zumindest annähernd gleich hoch sind.

Mit einem dritten Betriebsmodus des erfindungsgemäßen Betriebsverfahrens wird der Elektromotor 12 alleine von der Brennstoffzellen-Anlage 11 mit elektrischer Energie versorgt und es stellt die Brennstoffzellen-Anlage 11 darüber hinaus zusätzliche elektrische Energie zur Verfügung, die im Akkumulator 13 gespeichert werden kann, d.h. es kann der Akkumulator 13 zusätzlich beladen werden. Dies soll jedoch nur dann bzw. nur solange erfolgen, als bzw. bis der Akkumulator 13 noch ein gewisses Rest-Speichervermögen besitzt. Der Akkumulator 13 wird also von der Brennstoffzellen-Anlage 11 zumindest dann nicht vollständig aufgefüllt, wenn ein weiteres Energie-Potenzial vorhanden ist, welches dem Akkumulator 13 zugeführt werden könnte. Dieses weitere Energie-Potential wird vorrangig durch die kinetische Energie des mit diesem System ausgerüsteten KraftFahrzeugs gebildet. Soll diese bewegte Fahrzeug abgebremst werden, so erfolgt dies soweit als möglich unter Rekuperation der kinetischen Energie, wofür der auf den Fahrzeug-Antrieb einwirkende Elektromotor 13 als Generator betrieben wird. Die beim daraus resultierenden Abbremsen des Fahrzeugs im Generator bzw. Elektromotor 12 erzeugte elektrische Energie soll dem Akkumulator 13 zugeführt werden. Damit dies möglich ist, darf dieser nicht vollständig beladen sein und es wird daher in diesem dritten Betriebsmodus der Akkumulator 13 von der Brennstoffzellen-Anlage 11 nur soweit beladen, dass die aktuell im Fahrzeug vorliegende kinetische Energie ggf. unter Berücksichtigung der Umwandlungsverluste als elektrische Energie im Akkumulator 13 gespeichert werden kann. Solange sind also das das erste Schaltelement SE1 andauernd geschlossen und das zweite Schaltelement SE2 ist dabei jedenfalls solange geschlossen, als die Differenz der elektrischen Spannungsniveaus U2 und U3 nicht derart hoch ist, dass der maximal zulässige Ladestrom des Akkumulators 13 überschritten wird. Sollte hingegen die Differenz zwischen dem Spannungsniveau U2 am Knoten K und dem Spannungsniveau U3 des Akkumulators 13 höher bzw. so hoch sein, dass der für den Akkumulator 13 maximal zulässige Ladestrom überschritten werden würde, so wird zum Schutz des Akkumulators 13 das zweite Schaltelement SE2 geöffnet.

Ein vierter Betriebsmodus wurde im vorhergehenden Absatz bereits kurz erwähnt, nämlich die Rekuperation von kinetischer Energie des Fahrzeugs, die im als Generator betriebenen Elektromotor 12 in elektrische Energie umgewandelt wird, danach im Wechselrichter 12* soweit vorhanden und erforderlich gleichgerichtet wird und daraufhin dem Akkumulator 13 zugeführt wird, der aufgrund der im vorhergehenden Absatz geschilderten Strategie des dritten Betriebsmodus noch ausreichende Kapazität bzw. SpeicherVermögen für diese Energie-Menge besitzt. In diesem vierten Betriebsmodus ist das erste Schaltelement SE1 geöffnet und das zweite Schaltelement SE2 geschlossen.

Mit einem fünften Betriebsmodus des erfindungsgemäßen Betriebsverfahrens stellt bei stillstehendem Elektromotor 12 die Brennstoffzellen-Anlage 11 elektrische Energie zur Verfügung, die bei einer auf die wesentlichen Elemente beschränkten Schaltungsanordnung gemäß der vorliegenden Figur 1 vollständig im Akkumulator 13 gespeichert wird. In einem realen in einem Kraftfahrzeug verbauten System kann ein Teil der in der Brennstoffzellen-Anlage 11 gewonnenen elektrischen Energie aber auch für beliebige elektrische Hilfsaggregate des Fahrzeugs verwendet werden. In diesem vierten Betriebsmodus sind das erste Schaltelement SE1 und das zweite Schaltelement SE2 geschlossen, jedoch kann auch dies nur solange der Fall sein, als der sich damit einstellende elektrische Ladestrom für den Akkumulator 13 kleiner als dessen maximal zulässiger Ladestrom ist. Falls dies nicht gewährleistet ist, muss das zweite Schaltelement SE2 geöffnet werden, wonach die Brennstoffzellen-Anlage 11 in ihren Leerlaufbetrieb gelangt.

Beispielsweise für den Fall, dass sich insbesondere im soeben erläuterten fünften Betriebsmodus aufgrund einer hohen Spannungsdifferenz zwischen dem Spannungsniveau U1 (bei geöffnetem ersten Schaltelement SE1) und dem Spannungsniveau U3 (bei geöffnetem zweiten Schaltelement SE2) ein unzulässig hoher Ladestrom von der Brennstoffzellen-Anlage 11 zum Akkumulator 13 (bei geschlossenen Schaltelementen SE1 und SE2) einstellen würde, kann aber auch das von der Brennstoffzellen-Anlage 11 bereit gestellte Spannungsniveau U1 soweit abgesenkt werden, dass der sich dann einstellende Ladestrom unterhalb des besagten Grenzwerts bleibt. Eine solche Absenkung des Spannungsniveaus U1 der Brennstoffzellen-Anlage 11 kann durch Veränderung, konkret Verringerung des Sauerstoffgehalts auf den Kathodenseiten der Einzel-Brennstoffzellen der Brennstoffzellen-Anlage 11 dargestellt werden. Bevorzugt erfolgt eine solche bedarfsweise Anpassung des Spannungsniveaus U1 bzw. der Klemmenspannung der Brennstoffzellen-Anlage 11 durch Veränderung der Rate von auf die Kathodenseite von deren Einzel-Brennstoffzellen zurück geführtem Abgas und/oder durch Veränderung des Luftdurchsatzes an den besagten Kathodenseiten.

**Figur 2** zeigt prinzipiell eine Anordnung zur Veränderung des Sauerstoffgehalts an den Kathodenseiten der Brennstoffzellen der Brennstoffzellen-Anlage 11. Dabei ist eine Luft-Zufuhreinrichtung dieser Brennstoffzellen- Anlage 11 in ihrer Gesamtheit mit der Bezugsziffer 20 gekennzeichnet, während die Abgas-Anlage der Brennstoffzellen-Anlage 11 die Bezugsziffer 30 trägt. In der Luft-Zufuhreinrichtung 20 ist ein Kompressor 21 vorgesehen, der schaltbar über verschiedene Ansaug-Wege Luft aus der Umgebung U über einen Luftkühler 22 zu den Kathodenseiten der Einzel-Brennstoffeellen der Brennstoffzellen-Anlage 11 fördern kann. Im ersten Ansaug-Weg des Kompressors 21 ist ein Regelventil 24 vorgesehen und diesem ein Luftfilter 25 vorgeschaltet und in einem zweiten hierzu parallelen Ansaug-Weg befindet ist ebenfalls ein Regelventil 26 vorgesehen und in Reihe mit diesem ein noch näher erläutertes Molekularsieb 27. Stromauf des Kompressors 21 mündet ferner in der Luftzufuhr-Einrichtung 20 eine Abgas-Rückführleitung 31, die von der Abgas-Anlage 30 abzweigt und in der ein regelbares Ventil 32 vorgesehen ist, so dass der Kompressor 21 über die genannten Regel-Ventile 24, 26, 32 ein gezielt einstellbares Verhältnis von Umgebungsluft und Abgas der Brennstoffzellen-Anlage 11 den Kathodenseiten der Einzel-Brennstoffzellen der Brennstoffzellen-Anlage 11 zuführen kann.

Ist die Brennstoffzellen-Anlage 11 in Betrieb und sind die Ventile 32 und 24 zumindest teilweise geöffnet, so beinhaltet der den Kathodenseiten der Brennstoffzellen zugeführte Luftstrom neben Umgebungsluft auch eine gewisse Menge von Brennstoffzellen-Abgas, welches erheblich weniger Sauerstoff als die Umgebungsluft enthält. Durch gezielte Einstellung der Förderleistung des Kompressors 21 und der regelbaren Ventile 32 und 24 ist somit die Menge von den Einzel-Brennstoffzellen zugeführtem Sauerstoff einstellbar. Auf diese Weise ist das von der Brennstoffzellen-Anlage 11 bereit gestellte Spannungsniveau U1 veränderbar. Im übrigen ist bei geschlossenem Ventil 32 auch durch gezielte Einstellung der Förderleistung des Kompressors 21 der Luftdurchsatz alleine, d.h. die Menge von zugeführ ter Luft an den Kathodenseiten der Einzel-Brennstoffzellen in einer gewünschten Weise veränderbar bzw. einstellbar und auch damit das besagte Spannungsniveau U1 beeinflussbar.

Nun auf den zweiten Ansaug-Weg des Kompressors 21 mit dem in der Luftzufuhreinrichtung 20 vorgesehenen Molekularsieb 27 und nachgeschaltetem Regel-Ventil 26 Bezug nehmend können die regelbaren Ventile 24, 26 und 32 beispielsweise derart geschaltet sein, dass der Kompressor 21 ausschließlich über dieses Molekularsieb 27 Luft aus der Umgebung U ansaugt. Dabei werden in diesem Molekularsieb 27 vorzugsweise Stickstoff-Moleküle aus dem Luftstrom heraus gefiltert, so dass mit diesem Molekular sieb 27 der Sauerstoffgehalt im den Kathodenseiten der Einzel-Brennstoffzellen zugeführten Luftstrom erhöht werden kann, wenn die Förderleistung des Kompressors 21 entsprechend angepasst wird.

Eine alternative oder zusätzliche Möglichkeit zur Erhöhung des Sauerstoffgehalts in diesem zugeführten Luftstrom besteht in einem vorzugsweise als Kurzzeitspeicher ausgebildeten Speicher 23 für Sauerstoff, der hier in einem Bypass zum Kompressor 21 vorgesehen ist. Stromauf sowie stromab des Kompressors 21 ist dieser Kurzzeit-Speicher 23, der bspw. durch ein geeignetes Zeolith gebildet sein kann, jeweils über ein Ventil 24a bzw. 24b mit der Luftzufuhreinrichtung 20 verbindbar bzw. von dieser abtrennbar. Ist das Ventil 24a, über welches die Saugseite des Kompressors 21 mit dem Speicher 23 verbunden ist, geschlossen, und ist das andere Ventil 24b, über welches die Druckseite des Kompressors 21 mit dem Speicher 23 verbunden ist, geöffnet, so fördert der Kompressor 21 Luft in den Kurzzeit-Speicher 23, wo - falls dieser vorhergehend entleert wurde - unter anderem der darin enthaltene Sauerstoff absorbiert, d.h. zwischengespeichert werden kann. Wird zu einem späteren Zeitpunkt das Ventil 24a stromauf des Kompressors 21 geöffnet und ist dann das Ventil 24b stromab des Kompressors 21 geschlossen, so saugt der Kompressor 21 bei Vorliegen geeigneter Druckverhältnisse im wesentlichen alleine den im Kurzzeit-Speicher 23 gespeicherten Sauerstoff aus dem Speicher 23 ab und führt diesen zusammen mit dem aus der Umgebung angesaugten Luftstrom den Einzel-Brennstoffzellen der Brennstoffzellen-Anlage 11 zu. Die bei der vorhergehenden Beladung des Kurzzeit-Speichers 23 in diesem ebenfalls gespeicherten Stickstoff-Moleküle werden zu einem anderen Zeitpunkt oder über eine nicht dargestellte Abluft-Öffnung aus dem Speicher 23 entfernt, um diesen anschließend neuerlich insbesondere mit den gewünschten Sauerstoff-Molekülen befüllen zu können.

Mit einer solchen zusätzlich über die Regel-Ventile 24 und/oder 26 gezielt beeinflussbaren Sauerstoff-Anreicherung des den Kathodenseiten der Brennstoffzellen der Brennstoffzellen-Anlage 11 zugeführten Luftstromes kann die Ausgangsleistung der Brennstoffzellen-Anlage 11 und damit das von dieser bereit gestellte Spannungsniveau U1 bedarfsweise angehoben werden. Damit kann beispielsweise dem Elektromotor 12 noch mehr elektrische Energie zur Verfügung gestellt werden.

Im übrigen empfiehlt es sich, dass die elektrische Spannung aller Einzel-Brennstoffzellen der Brennstoffzellen-Anlage 11 kontinuierlich auf Einhaltung der zulässigen Grenzwerte überwacht wird und ein Überschreiten oder Unterschreiten der zulässigen elektrischen Spannung durch Veränderung der den Einzel-Brennstoffzellen der Brennstoffzellen-Anlage 11 zugeführten Reaktionsgasmenge (= Menge von Sauerstoff und Wasserstoff) verhindert wird.

## Patentansprüche

1. Betriebsverfahren eines elektrischen Energie-Erzeugungs-, Bereitstellungs- und Verbrauchs-Systems eines Kraftfahrzeugs, bestehend aus einer Brennstoffzellen-Anlage (11) mit zumindest einer Wasserstoff-(Luft)-Sauerstoff-Brennstoffzelle, einem Akkumulator (13) und einem insbesondere als Fahrzeug-Antriebsmotor fungierenden Elektromotor (12), die unter Zwischenschaltung von Schaltelementen (SE1, SE2) solchermaßen elektrisch gekoppelt sind, dass die Brennstoffzellen-Anlage (11) sowohl den Elektromotor (12) als auch den Akkumulator (13) mit elektrischer Energie versorgen kann und der Akkumulator (13) den Elektromotor (12) mit elektrischer Energie versorgen kann, wobei
mit einer solchen System-Auslegung, der Akkumulator (13) sowohl von der Brennstoffzellen-Anlage (11) alleine als auch vom als Generator betriebenen Elektromotor (12) alleine im wesentlichen vollständig aufgeladen werden kann,
ohne Durchführung einer elektrischen Spannungs-Wandlung und folglich ohne Vorsehen eines elektrischen Spannungswandlers in Abhängigkeit von der Höhe des von der Brennstoffzellen-Anlage bereit gestellten elektrischen Spannungsniveaus (U1) und des vom Akkumulator angebotenen elektrischen Spannungsniveaus (U3) und der vom elektrischen Fahrzeug-Antriebsmotor nachgefragten elektrischen Leistung
ein erstes Schaltelement (SE1) in der elektrischen Verbindung zwischen der Brennstoffzellen-Anlage (11) und einem mit dem Akkumulator (13) und dem Elektromotor (12) elektrisch verbunden Knotenpunkt (K) sowie ein zweites Schaltelement (SE2) in der Verbindung zwischen dem Akkumulator (13) und dem besagten Knotenpunkt (K) derart bedarfsgerecht geöffnet oder geschlossen, d.h. in eine keinen Stromdurchgang oder einen Stromdurchgang ermöglichende Position gebracht werden,
dass der elektrische Leistungsbedarf des Elektromotors vorrangig aus der Brennstoffzellen-Anlage (11) und hilfsweise zusätzlich aus dem Akkumulator (13) befriedigt wird,
**dadurch gekennzeichnet, dass** wenn die von der Brennstoffzellen-Anlage (11) als Angebot bereit stehende elektrische Leistung anhand von deren Spannungsniveau (U1) erkennbar die vom Elektromotor (12) nachgefragte elektrische Leistung übersteigt, die sich aus der Differenz von Angebot und Nachfrage ergebende Überschuss-Leistung der Brennstoffzellen-Anlage (11) solange dem Akkumulator (13) zugeführt wird, als der maximal zulässige Lade-Strom des Akkumulators (13) nicht überschritten wird und der Akkumulator (13) noch ein Rest-Speichervermögen zumindest in Höhe der im aktuellen Fahrzustand des Fahrzeugs durch Rekuperation über den als Generator betriebenen Elektromotor (12) dem Akkumulator (13) zuführbaren kinetischen Energie des Kraftfahrzeugs besitzt.

2. Betriebsverfahren nach Anspruch 1, **dadurch gekennzeichnet, dass** in den Fällen, in denen das von der Brennstoffzellen-Anlage (11) bereit gestellte Spannungsniveau (U1) nennenswert höher liegt als das vom Elektromotor (12) und dem Akkumulator (13) verarbeitbare Spannungsniveau,
oder nennenswert niedriger liegt als das vom Elektromotor (12) oder dem Akkumulator (13) nachgefragte Spannungsniveau,
das Spannungsniveau (U1) der Brennstoffzellen-Anlage (11) durch Modulation des Sauerstoffgehalts auf der Kathodenseite der Brennstoffzelle(n) dem Bedarf angepasst wird.

3. Betriebsverfahren nach Anspruch 2, **dadurch gekennzeichnet, dass** zur bedarfsweisen Absenkung des Spannungsniveaus der Brennstoffzellen-Anlage (11) die Rate von auf die Kathodenseite der Brennstoffzelle(n) zurück geführtem Abgas und/oder der Luftdurchsatz an der Kathodenseite der Brennstoffzelle(n) verändert wird.

4. Betriebsverfahren nach Anspruch 2 oder 3, **dadurch gekennzeichnet, dass** zur bedarfsweisen Anhebung des Spannungsniveaus (U1) der Brennstoffzellen-Anlage (11) der Sauerstoff-Gehalt des der Kathodenseiten der Brennstoffzelle(n) zugeführten Luftstroms erhöht wird.

5. Betriebsverfahren nach Anspruch 4, **dadurch gekennzeichnet, dass** zur Erhöhung des Sauerstoffgehalts des zugeführten Luftstroms diesem zuvor kurzzeitig in einem geeigneten Speichermaterial (23) aus zugeführter Luft gespeicherter Sauerstoff zugefügt wird oder/und mittels eines Molekularsiebs (27) oder dgl. der Stickstoff-Anteil im zugeführten Luftstrom verringert wird

6. Betriebsverfahren nach einem der vorangegangenen Ansprüche,
**dadurch gekennzeichnet, dass** die elektrische Spannung aller Einzel-Brennstoffzellen der Brennstoffzellen-Anlage (11) kontinuierlich auf Einhaltung der zulässigen Grenzwerte überwacht wird und ein Überschreiten oder Unterschreiten dieser Grenzwerte durch Veränderung der zugeführten Brennstoffmenge verhindert wird.

## Claims

1. An operating method for an electric energy production, provision and consumption system of a motor vehicle, comprising a fuel cell system (11) with at least one hydrogen-(air)-oxygen fuel cell, an accumulator (13) and an electric motor (12) acting, more especially, as a vehicle drive motor, which are electrically coupled with the interposition of switching elements (SE1, SE2) in such a way that the fuel cell system (11) can supply both the electric motor (12) and the accumulator (13) with electric energy and the accumulator (13) can supply the electric motor (12) with electric energy, wherein, with a system configuration of this type, the accumulator (13) can be substantially completely charged both by the fuel cell system (11) alone and by the electric motor (12) alone, which is operated as a generator, without carrying out an electric voltage conversion and consequently without providing an electric voltage convertor, depending on the electric voltage level (U1) provided by the fuel cell system and the electric voltage level (U3) provided by the accumulator and on the electric power required by the electric vehicle drive motor, a first switching element (SE1) in the electric connection between the fuel cell system (11) and a nodal point (K) electrically connected to the accumulator (13) and the electric motor (12) as well as a second switching element (SE2) in the connection between the accumulator (13) and said nodal point (K) are opened and closed as required, i.e. brought into a position allowing no passage of current or allowing a passage of current, and wherein the electric power requirement of the electric motor is primarily satisfied from the fuel cell system (11) and alternatively additionally from the accumulator (13), **characterised in that** when the electric power provided by the fuel cell system (11) exceeds the electric power required by the electric motor (12), as detectable with the aid of the voltage level (U1) thereof, the excess power of the fuel cell system (11) being produced from the difference of the supply and demand is fed to the accumulator (13) for as long as the maximum permissible charging current of the accumulator (13) is not exceeded and the accumulator (13) still has a residual storage capacity at least at the level of the kinetic energy of the motor vehicle that can be fed to the accumulator (13) in the current driving state of the vehicle by recuperation by means of the electric motor (12) operated as a generator.

2. An operating method according to claim 1, **characterised in that** in the cases, in which the voltage level (U1) provided by the fuel cell system (11) is significantly higher than the voltage level that can be processed by the electric motor (12) and the accumulator (13) or is significantly lower than the voltage level required by the electric motor (12) or the accumulator (13), the voltage level (U1) of the fuel cell system (11) is adapted to the demand by modulating the oxygen content on the cathode side of the fuel cell(s).

3. An operating method according to claim 2, **characterised in that** to reduce the voltage level of the fuel cell system (11) as required, the rate of exhaust gas returned to the cathode side of the fuel cell(s) and/or the air throughput on the cathode side of the fuel cell(s) is changed.

4. An operating method according to claim 2 or 3, **characterised in that** to raise the voltage level (U1) of the fuel cell system (11) as required, the oxygen content of the air flow fed to the cathode side of the fuel cell(s) is increased.

5. An operating method according to claim 4, **characterised in that** to increase the oxygen content of the fed air flow, oxygen previously stored briefly in a suitable storage material (23) of fed air is added thereto and/or the nitrogen content in the fed air flow is reduced by means of a molecular sieve (27).

6. An operating method according to any one of the preceding claims, **characterised in that** the electric voltage of all the individual fuel cells of the fuel cell system (11) is monitored continuously for the maintaining of the permissible limit values and an exceeding or falling below of these limit values is prevented by changing the fed fuel quantity.

## Revendications

1. Procédé de gestion d'un système de production et de consommation d'énergie électrique de fourniture d'un véhicule constitué d'une installation à piles à combustible (11) ayant au moins une pile à combustible hydrogène- (air)-oxygène, un accumulateur (13) et un moteur électrique (12) fonctionnant en particulier en tant que moteur d'entraînement du véhicule qui sont accouplés électriquement avec interposition d'éléments de commutation (SE1, SE2) de sorte que l'installation à piles à combustible (11) puisse alimenter en énergie électrique le moteur électrique (12) ainsi qu'également l'accumulateur (13) et que l'accumulateur (13) puisse alimenter le moteur électrique (12) en énergie électrique, ayant une configuration de système, telle que l'accumulateur (13) puisse être chargé essentiellement totalement par l'installation à piles de combustible (11) seule et également par le moteur électrique (12) fonctionnant en tant que générateur seul,
sans mettre en oeuvre une transformation de tension électrique et par suite sans prévoir un transformateur de tension électrique, en fonction de la valeur du niveau de la tension électrique (U1) déjà établi par l'installation à piles en combustible, du niveau de la tension électrique (U3) offert par l'accumulateur et de la puissance électrique demandée par le moteur d'entraînement du véhicule,
un premier élément de commutation (SE1) situé dans la liaison électrique entre l'installation à piles à combustible (11) et un point noeud (K) relié électriquement à l'accumulateur (13) et au moteur électrique (12) ainsi qu'un second élément de commutation (SE2) dans la liaison entre l'accumulateur (13) et le point noeud susmentionné (K) pouvant,
en cas de besoin être ouverts ou fermés, c'est-à-dire amené dans une position ne permettant pas ou permettant le passage du courant,
de sorte que la demande en énergie électrique du moteur électrique puisse être satisfaite prioritairement à partir de l'installation à piles à combustible (11) et auxiliairement, en outre, à partir de l'accumulateur (13),
**caractérisé en ce que**
lorsque la puissance électrique mise à disposition en tant qu'offre par l'installation à piles à combustible (11) qui peut être déterminée à partir de son niveau de tension (U1) est supérieure à la puissance électrique demandée par le moteur électrique (12). La puissance en excès de l'installation à piles à combustible (11) qui résulte de la différence entre l'offre et la demande est transférée à l'accumulateur (13) tant que le courant de charge maximum admissible n'est pas dépassé et que l'accumulateur (13) dispose encore d'une capacité d'accumulation résiduelle ayant au moins le niveau de l'énergie cinétique pouvant être transférée à l'accumulateur (13) par récupération, par l'intermédiaire du moteur électrique (12) fonctionnant en tant que générateur dans l'état actuel du véhicule.

2. Procédé de gestion conforme à la revendication 1,
**caractérisé en ce que**
dans les cas pour lesquels le niveau de tension (U1) déjà mis à disposition par l'installation à piles à combustible (11) est situé à un niveau notablement supérieur au niveau de tension pouvant être consommé par le moteur électrique (12) et l'accumulateur (13) ou est situé à un niveau notablement inférieur au niveau de tension demandé par le moteur électrique (12) ou l'accumulateur (13), le niveau de tension (U1) de l'installation à piles à combustible (11) est adapté à la demande par modulation de la teneur en oxygène du côté cathode de la ou des pile(s) à combustible.

3. Procédé de gestion conforme à la revendication 2,
**caractérisé en ce que**
pour diminuer en cas de besoin le niveau de tension de l'installation à piles à combustible (11) on modifie le taux de gaz d'échappement retourné du côté cathode de la ou des pile(s) à combustible et/ou le débit d'air du côté cathode de la ou des pile(s) à combustible.

4. Procédé de gestion conforme à la revendication 2 ou 3,
**caractérisé en ce que**
pour augmenter en cas de besoin le niveau de tension (U1) de l'installation à piles à combustible (11), on augmente la teneur en oxygène du flux d'air transféré au côté cathode de la ou des pile(s) à combustible.

5. Procédé de gestion conforme à la revendication 4,
**caractérisé en ce que**
pour augmenter la teneur en oxygène du flux d'air transféré, on ajoute préalablement temporairement à celui-ci de l'oxygène emmagasiné dans un matériau accumulateur (23) adapté et/ou on diminue au moyen d'un tamis moléculaire (27) ou similaire le pourcentage d'azote dans le flux d'air transféré.

6. Procédé de gestion conforme à l'une des revendications précédentes,
**caractérisé en ce qu'**
on surveille en continu la tension électrique de toutes les piles à combustible indépendantes de l'installation à piles à combustible (11) de façon à maintenir les valeurs limites admissibles, et on empêche un dépassement par le haut ou par le bas de ces valeurs limites par modification de la quantité de combustible transféré.
